# EUROPEAN PATENT SPECIFICATION

(11) **EP 1 752 505 B1**
(45) Date of publication and mention of the grant of the patent: **16.09.2009**
(21) Application number: 06117722.6
(22) Date of filing: 24.07.2006
(51) Int. Cl.: C09D 11/00

(54) **Ink-jet ink, ink-jet set, and ink-jet recording method**
Tintenstrahltinte, Tintenstrahltintenset und Tintenstrahldruckmethode
encre pour jet d'encre, assortiment d'encres pour l'impression par jet d'encre et procédé d'impression par jet d'encre

(30) Priority: 08.08.2005 JP 2005229240
(43) Date of publication of application: 14.02.2007
(73) Proprietor: KONICA MINOLTA HOLDINGS, INC., Tokyo 100-0005 (JP)
(72) Inventor: Ohkubo, Kenichi c/o Konica Minolta Techn.Cent.,Inc, Tokyo Tokyo 191-8511 (JP); Furuno, Kumiko c/o Konica Minolta IJ Techn, Inc, Tokyo Tokyo 191-8511 (JP); Nakamura, Masaki c/o Konica Minolta IJ Tech.,Inc., Tokyo Tokyo 191-8511 (JP); Yamauchi, Masayoshi c/o Konica Minolta IJ Tech.Inc, Tokyo Tokyo 191-8511 (JP); Tsubaki, Yoshinori c/o Konica Minolta Tech.Cent., Tokyo Tokyo 191-8511 (JP)
(74) Representative: Gille Hrabal Struck Neidlein Prop Roos

(56) References cited:
- EP-A2- 1 477 318
- US-A1- 2004 048 973
- DATABASE WPI Week 199819 Derwent Publications Ltd., London, GB; AN 1998-213027 XP002412499 -& JP 10 060351 A (KAO CORP) 3 March 1998 (1998-03-03)

## Description

This application is based on Japanese Patent Application No. 2005-229240 filed on August 08, 2005, in Japanese Patent Office, the entire content of which is hereby incorporated by reference.

### FIELD OF THE INVENTION

This invention relates to an ink-jet ink and an ink-jet ink set, which contain a polymer capable of cross-link bonding with irradiation by active energy rays, and to a method of ink-jet recording using the same polymers.

### BACKGROUND OF THE INVENTION

An ink-jet recording method enables very precise image recording with a relatively simple apparatus and has rapidly prevailed in various fields. Further, the applications are varied and employed in each is a recording medium or an ink-jet ink suitable for each applications. Specifically, in recent years, the rate of ink-jet recording has been markedly enhanced, and ink-jet printers, which resulted in printing performance applicable to convenience printing, have been developed. However, in ink-jet printers, in order to utilize their full capability, printing media manufactured specifically for ink-jet printing are preferable, most of which exhibit absorbability of ink-jet ink.

When recording is conducted onto low ink absorptive media such as coated paper or art paper, or onto non-ink absorptive media such as plastic film, problems such as so-called bleeding occur in which inks, differing in hue, mix on recording media, resulting in non-targeted color mixing. In typical ink-jet recording systems, the above problem has been a drawback in terms of providing compatibility of recording media.

In order to overcome the above drawback, disclosed is the hot-melt type ink-jet recording method which employs a hot-melt type ink composition including a wax, being solid at room temperature as a raw material, the wax based ink is liquefied by heat and ejected via various means to adhere onto the recording medium, and at the same time the ink is cooled to cure to form the dot-based text or image (please refer to Patent Documents 1 and 2). This hot-melt type ink exhibits characteristics of not staining during handling due to its solid state at room temperature, and further not causing nozzle clogging due to minimal ink-evaporation during ink melting. Further, it is noted that this ink composition exhibits less color bleeding and provides excellent printing quality regardless of paper quality. However, the image recorded with this method exhibits some drawbacks, such as a deteriorated image quality due to raised ink dots because the ink dots are formed of a soft wax, which lacks abrasion resistance. On the other hand, disclosed is an ink-jet recording ink which is cured via exposure to ultraviolet radiation (please refer to Patent Document 3). Further, proposed is a so-called non-water-based ink which incorporates a pigment as a color material, and tri- or higher functional polyacrylates, as well as incorporating ketone and alcohol as a major solvent (please refer to Patent Document 4). Further, proposed is a water-based active energy ray curable type ink-jet recording ink composition which incorporates a polyurethane compound having a group containing an active energy ray curable unsaturated double bond, a basic compound, a color material, a water-soluble organic solvent, and water (please refer to Patent Document 5). Still further, proposed is a water-based ink-jet ink which incorporates a self-dispersing type pigment in which at least one hydrophilic group bond to the surface of pigment particles, an ultraviolet ray curable type monomer composed of a vinyl compound, a photopolymerization initiator, and water (please refer to Patent Document 6).

In these active energy ray curable reactive inks proposed above, recording onto non-absorptive recording media has been enabled, because the ink itself is cured with a curable component following irradiation with ultraviolet rays. However, when the ink contains sufficient amounts of curable components for image fixing, solid components of the ink increase, resulting in problems of image quality, specifically texture of the printed image such as glossiness, by raised dots of ink.

Further proposed is a method to incorporate a styrene series copolymer in ink to enhance water resistance. (For example, please refer to Patent Document 7.) However, there is no description at all in that document regarding the use of a polymer compound curable with irradiation of ultraviolet rays.
Patent Document 1: U.S. Patent (hereinafter, referred to as USP) No. 4,391,369
Patent Document 2: USP No. 4,484,948
Patent Document 3: USP No. 4,228,438
Patent Document 4: Examined Japanese Patent Application Publication No. (hereinafter, referred to as JP-B) 5-64667
Patent Document 5: Unexamined Japanese Patent Application Publication No. (hereinafter, referred to as JP-A) 2002-80767
Patent Document 6: JP-A 2002-275404
Patent Document 7: JP-A 8-231906

### SUMMARY OF THE INVENTION

The present invention was achieved in view of the above-cited problems. An object of this invention is to provide an ink-jet ink which exhibits color bleeding resistance and beading resistance on low adsorptive recording media as well as on non-adsorptive recording media, and feathering resistance on plain paper, and which also features excellent ejection stability and storage stability, while offering an image excellent in abrasion resistance, water resistance and glossiness. Another object is to provide an ink-jet ink set and a ink-jet recording method using the same.

The objects of the present invention are achievable through the following embodiments:

Item 1. An ink-jet ink comprising water, a pigment, Polymer A and Polymer B,
wherein Polymer A is a polymer compound having a plurality of side chains on a hydrophilic main chain and capable of undergoing cross-linking among the side chains when exposed to active rays; and

Polymer B is a copolymer which is obtained from a carboxylic acid containing monomer neutralized by an amine compound and a nonionic monomer having a hydrophobic moiety exhibiting adsorption capability of the pigment, and Polymer B exhibiting a weight-average molecular weight of 5,000 to 100,000, and an acid value of 50 to 500 mgKOH/g.

Item 2. The ink-jet ink of Item 1 above, wherein the side chains of Polymer A are nonionic or anionic.

Item 3. The ink-jet ink of Item 1 or 2, wherein Polymer A, having side chains, are represented by Formula (A) :

Formula (A) P- [(X)m- (B) p- (Y) n]

Wherein P is a hydrophilic main chain, [(X)m-(B)p-(Y)n] represents a side chain, X is a linking group having two or more valences, B is a cross-linking group, Y is a hydrogen atom or a substituent group, m and n are each an integer of 0 or 1, and p is an integer of 1 or 2.

Item 4. The ink-jet ink of any one of Items 1 - 3, wherein the hydrophilic main chain of Polymer A is a saponified compound of polyvinyl acetate, a saponification ratio of which is 77 to 99% and a polymerization degree is 200 to 4,000.

Item 5. The ink-jet ink of any one of Items 1 - 4, wherein a modification ratio of the side chains compared to the hydrophilic main chain of Polymer A is 0.8 to 4 mol%.

Item 6. The ink-jet ink of any one of Items 1 - 5, wherein a content of Polymer B compared to the pigment is not less than 5 weight% and less than 200 weight%.

Item 7. The ink-jet ink of any one of Items 1 - 6, wherein a water-soluble photopolymerization initiator is incorporated.

Item 8. An ink-jet ink set comprising more than two kinds of ink-jet inks, wherein at least one of the ink-jet inks is an ink-jet ink of any one of Items 1 - 7.

Item 9. A method of ink-jet recording comprising the steps of:
a) ejecting an ink-jet ink of any one of Items 1 - 7 onto a recording medium to form an image;
b) irradiating the ejected image with active energy rays; and
c) drying the irradiated image.

Item 10. The method of ink-jet recording comprising the steps of:
a) ejecting an ink-jet ink comprising an ink-jet ink set of Item 8 onto a recording medium to form an image;
b) irradiating the ejected image with active energy rays; and
c) drying the irradiated image.

Item 11. The method of ink-jet recording of Item 9 or 10, wherein the recording medium is a low absorptive recording medium of the ink.

Item 12. The method of ink-jet recording of Item 9 or 10, wherein the recording medium is a non-absorptive recording medium of the ink.

Item 13. The method of ink-jet recording of Item 9 or 10, wherein the recording medium is plain paper.

According to this invention, it is possible to provide an ink-jet ink and an ink-jet ink set which offers an image excellent in abrasion resistance, water resistance and glossiness without the drawbacks of color bleeding resistance and beading resistance on low adsorptive recording media and non-adsorptive recording media, as well as feathering resistance on plain paper, and also exhibit excellent ejection stability and storage stability, and to provide an ink-jet recording method using the same.

### PREFERABLE EMBODIMENTS OF THIS INVENTION

It should be understood that no single element of any of the embodiments described herein is essential, and that it is within the contemplation of the invention that one or more elements (or method steps) of one or more embodiments of the invention as described herein may be omitted or their functionality may be combined with that of other elements as a general matter of design choice.

The preferred embodiments to practice the present invention will now be detailed.

As a result of close examination in view of the above problems, the inventors of this invention found that by use of the ink-jet ink of this invention, it is possible to provide an ink-jet ink and an ink-jet ink set which offers an image excellent in abrasion resistance, water resistance and glossiness without the drawbacks of color bleeding resistance and beading resistance on low adsorptive recording media and non-adsorptive recording media, as well as feathering resistance on plain paper, while also exhibiting excellent ejection stability and storage stability, which resulting in this invention. The ink-jet ink of this invention contains at least water, a pigment, Polymer A and Polymer B, where Polymer A is a polymer compound having a plurality of side chains on the hydrophilic main chain and capable of undergoing cross-linking between the side chains when exposed to active rays, while Polymer B is a copolymer which is obtained from a carboxylic acid containing monomer neutralized by an amine compound and a nonionic monomer having a hydrophobic moiety exhibiting adsorption capability of the pigment, exhibiting a weight-average molecular weight of 5,000 - 100,000, and an acid value of 50 - 500 mgKOH/g.

As a water-based ultraviolet curable ink described in foregoing Patent Document 1, in which ink monomers are polymerized by ultraviolet rays, there are problems of image quality, specifically unnaturalness of glossiness, due to raised ink dots in a recorded image, due in turn to large amounts of involatile curable components in the ink. As a result of studies by the inventors, it was determined that through the use of Polymer A, which has a plurality of side chains on the hydrophilic main chain and is capable of cross-linking among the side chains, the problems of ultraviolet curable ink described above were resolved. That is, in cases where the ink contains Polymer A of this invention, the ink gelates, becoming insoluble due to UV irradiation after printing, and thus bleeding and feathering are inhibited, resulting in the performence of a water-based ink-jet ink capable of forming an image of excellent smoothness. However, since the main chain of Polymer A of this invention is hydrophilic, it subsequently turned out to be insufficient in water resistance when an image is formed by the ink employing only Polymer A.

In this invention, when Polymer B is employed in combination with Polymer A, also of this invention, it was found that water resistance of printed portions is markedly enhanced, because the amine compound vaporizes after the ink is printed, and the remaining Polymer B become firmly solidified with any coexisting pigment and Polymer A. Above Polymer B is a copolymer obtained from a carboxylic acid containing monomer, neutralized with an amine compound and a nonionic monomer featuring a hydrophobic moiety capable of adsorption onto the pigment, a weight-average molecular weight of which is not less than 5,000, and not more than 100,000, and an acid value of which is not less than 50 mgKOH, and not more than 500 mgKOH. Thus, water resistance of the image caused by Polymer A of this invention is dramatically improved. Further, the firm solidification results in enhancement of adhesiveness of the ink layer to the base material after printing, and also achieves good fixability to non-adsorptive recording media. In addition, since Polymer B of this invention features characteristics of good compatibility with Polymer A existing after vaporization of the volatile components in the ink, this invention also provides the effect of excellent texture of print images, such as glossiness.

The present invention will now be detailed.

### Polymer A

The ink-jet ink (hereinafter, also referred to simply as the ink) of the present invention is characterized by incorporating Polymer A, as one polymer compound, which has a plurality of side chains on the main hydrophilic chain and is, when exposed to active rays, capable of undergoing cross-linking among the side chains. By incorporating Polymer A in the ink-jet ink, it enables stable printability onto various recording media, and enables high printed image quality ink-jet ink which provides a printed image exhibiting superior feathering resistance, beading resistance and bleeding resistance.

Examples of a polymer compound which features a plurality of side chains on the main hydrophilic chain and is, when exposed to actinic radiation, capable of undergoing cross-linking among the side chains, include those in which side chains such as a photodimerization type, a photodecomposition type, a photopolymerization type, a photomodification type, or a photodepolymerization type are introduced, for example, saponified polyvinyl acetate products, polyvinyl acetal, polyethylene oxide, polyalkylene oxide, polyvinylpyrrolidone, polyacrylamide, polyacrylic acid, hydroxyethyl cellulose, methyl cellulose, hydroxypropyl cellulose, and derivatives of the above hydrophilic resins, and also copolymers thereof. However, from the viewpoint of sensitivity and performance of the formed image, preferred is a photopolymerization type cross-linking group. Further, a preferable combination exists between ionicity of the pigment and the side chains of the foregoing Polymer A. Specifically, preferable is the combination of an anionic pigment and a nonionic or anionic side chains, from the perspective of image durability, ink storage stability, and continuous ejection stability. As such side chains, nonionic ones are most preferable. The reason for this preference is not clear, but in a combination of the above ions, there is a possibility of achieving the targeted effects due to resistance of decomposition of the ink composition and decreased association among the components in the ink composition.

The structure of the hydrophilic main chain and the side chains of Polymer A of this invention is greatly represented by following Formula (A).

Formula (A) P- [(X)m- (B) p- (Y) n]

in which P is the hydrophilic main chain, preferable examples of which are saponified polyvinyl acetate products, polyvinyl acetal, polyethylene oxide, polyalkylene oxide, polyvinylpyrrolidone, polyacrylamide, polyacrylic acid, hydroxyethyl cellulose, methyl cellulose, hydroxypropyl cellulose, and derivatives of the above hydrophilic resins, as well as copolymers thereof.

X is a bonding group exhibiting at least divalence, of which specifically listed are an alkylene group, an arylene group, a heteroarylene group, an ether group, a thioether group, an imino group, an ester group, an amide group, and a sulfonyl group, which may combine to form a divalent or more valent group. Preferably listed are bonding groups of more than divalent in combination with at least an alkylene oxide or aromatic group.

B is a cross-linking group, specifically a group containing a double bond or a triple bond, and may, for example, be an acrylic group, a methacrylic group, a vinyl group, an allyl group, a diazo group, or an azide group, preferably being an acrylic group or a methacrylic group.

Y is a hydrogen atom or a substituent group. As a substituent group, specifically listed is a halogen atom (such as a fluorine atom or a chlorine atom); an alkyl group (such as a group of methyl, ethyl, butyl, pentyl, 2-methoxyethyl, trifluoromethyl, 2-ethylhexyl, or cyclohexyl); an aryl group (such as a group of phenyl, p-tolyl, or a naphthyl); an acyl group (such as a group of acetyl, propionyl, or benzoyl); an alkoxyl group (such as a group of methoxy, ethoxy, or butoxy); an alkoxycarbonyl group (such as a group of methoxycarbonyl, or i-propoxycarbonyl); an acyloxy group (such as a group of acetyloxy, or ethylcarbonyloxy); a carbamoyl group (such as a group of methylcarbamoyl, ethylcarbamoyl, butylcarbamoyl, or phenylcarbamoyl); a sulfamoyl group (such as a group of sulfamoyl, methylsulfamoyl, dimethylsulfamoyl, or phenylsulfamoyl); an alkylthio group (such as a group of methylthio, ethylthio, or octylthio); an arylthio group (such as a group of phenylthio, or p-tolylthio); an alkylureide group (such as a group of methylureido, ethylureido, methoxyethylureido, or dimethylureido); an arylureide group (such as a phenylureide group); an alkylsulfonamide group (such as a group of methanesulfonamide, ethanesulfonamide, butanesulfonamide, trifluoromethylsulfonamide, 2,2,2-trifluoroethylsulfonamid); an arylsulfonamide group (such as a group of phenylsulfonamide, or tolylsulfonamide); an alkylaminosulfonylamino group (such as a group of methylaminosulfonylamino, or ethylaminosulfonylamino); an arylaminosulfonylamino group (such as a phenylaminosulfonylamino group); a hydroxyl group; or a heterocyclic group (such as a group of pyridyl, pyrazolyl, imidazolyl, furyl, or thienyl); each of these may further have a substituent group.

The [ ] brackets represent side chains.

"m" and "n" are each an integer of 0 or 1, and "p" is an integer of 1 or 2.

In view of easier introduction of side chains into the main hydrophilic chain as well as easier handling, preferred is saponified polyvinyl acetate. The saponification ratio is preferably 77 - 99%, while the degree of polymerization is preferably 200 - 4,000, more preferably 200 - 2,000 in view of easier handling, but still more preferably 200 - 500 in view of ejection stability. In cases when the degree of polymerization is more than 200, an appropriate increase in viscosity due to cross-linking is noted, resulting in desired bleeding and feathering resistance. Further, when it is at most 4,000, nozzle clogging resistance during continuous ejection remain acceptable.

In view of reactivity, the modification ratio (or conversion ratio) of the side chains to the main hydrophilic chain is preferably 0.8 - 4.0 mol%, but is more preferably 1.0 - 3.5 mol%. When it is at least 0.8 mol%, sufficient cross-linking is realized, while when it is more than 4.0 mol%, the crosslink density rises excessively, resulting in a hard and fragile film, whereby the film strength is decreased.

Preferred as photo-dimerization type modifying groups are those into which a diazo group, a cinnamoyl group, a stilbazolium group, or a stilquinolium group is introduced. Examples include the photosensitive resins (compositions) described in JP-A 60-129742.

The photosensitive resins described in above JP-A 60-129742 are the compounds represented by following Formula (1) in which a stilbazolium group is introduced into the polyvinyl alcohol structure.

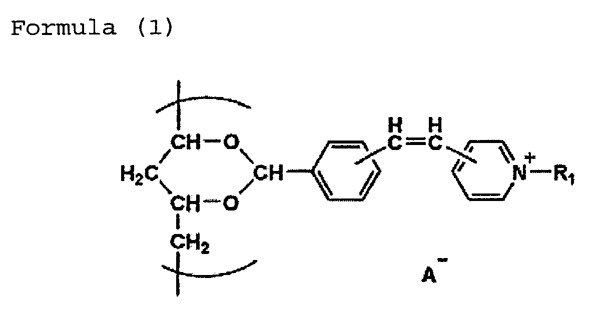

In Formula (1), R₁ is an alkyl group having 1 - 4 carbon atoms, while A⁻ is a counter anion.

The photosensitive resins described in JP-A 56-67309 are resinous compositions which have, in the polyvinyl alcohol structure, either the 2-azido-5-nitrophenylcarbonyloxyethylene structure represented by following Formula (2), or the 4-azido-3-nitrophenylcarbonyloxyethylene structure represented by following Formula (3).

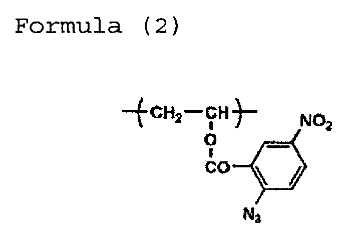

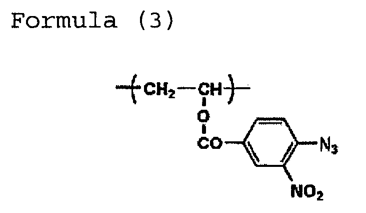

Further, preferably employed are the modifying groups represented by following Formula (4).

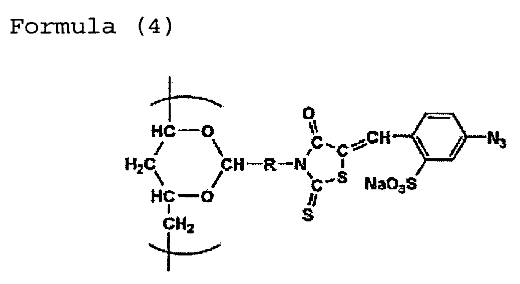

In Formula (4), R is an alkylene group, or an aromatic ring. Preferable is a benzene ring.

In view of reactivity, preferred as a photopolymerization type modifying groups are resins represented by following Formula (5) described, for example, in JP-A Nos. 2000-181062 and 2004-189841.

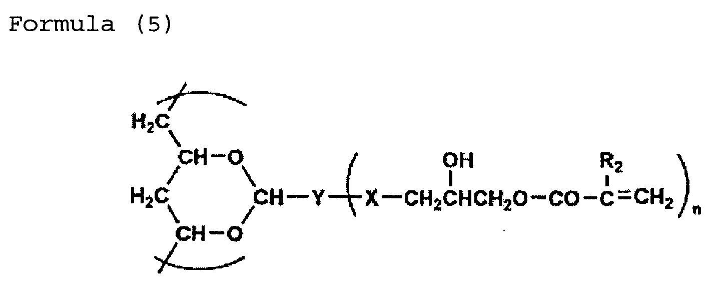

In Formula (5), R₂ is a methyl group or a hydrogen atom, n is 1 or 2, X is ―(CH₂)ₘ-COO- or -O-, Y is an aromatic ring or a single bond, and m is an integer of 0 - 6.

Further, it is preferable to apply, to conventional water-soluble resins, the photopolymerization type modifying group represented by following Formula (6) described in JP-A 20004-161942.

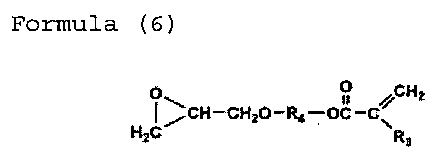

In Formula (6), R₃ is a methyl group or a hydrogen atom, while R₄ is a straight or branched alkylene group having 2 - 10 carbon atoms.

In this invention, it is preferable to incorporate a photopolymerization initiator and a sensitizing agent into the ink. Such compounds may be in such a state that they are dissolved in solvents or dispersed, or chemically bonded to photosensitive resins.

Applied photopolymerization initiators and photosensitizing agents are not specifically limited, and in view of mixing properties and reaction efficiency, water-soluble ones are preferred. Specifically, preferred are 4-(2-hydroxyethoxy)phenyl-(2-hydroxy-2-propyl)ketone (HMPK), thioxanthone ammonium salts (QTX), and benzophenone ammonium salts (ABQ), in view of mixing properties in water based solvents.

Further, in view of compatibility with Polymer A, preferred are 4-(2-hydroxyethoxy)phenyl-(2-hydroxy-2-propyl)ketone (n = 1, HMPK) represented by following Formula (7) and ethylene oxide addition products (n = 2 - 5) thereof.

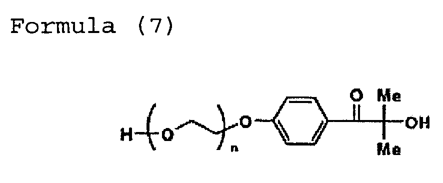

In Formula (7), n is an integer of 1 - 5.

Further, other examples which are preferably employed include benzophenones such as benzophenone, hydroxybenzophenone, bis-N,N-dimethylaminobenzophenone, bis-N,N-diethylaminobenzophenone, and 4-methoxy-4'-dimethylaminobenzophenone; thioxanthones such as thioxanthone, 2,4-diethylthioxanthone, isopropylthioxanthone, chlorothioxanthone, and isopropoxychlorothioxanthone; anthraquinones such as ethylanthraquinone, benzanthraquinone, aminoanthraquinone, and chloroanthraquinone; acetophenones; benzoin ethers such as benzoin methyl ether; 2,4,6-trihalomethyltriazines; 1-hydoxycyclohexyl phenyl ketone, a 2-(o-chlorophenyl-4,5-diphenylimidazole dimer, a 2-(o-chlorophenyl)-4,5-phenylimidazole dimer, a 2-(0-methoxyphenyl)-4,5-phenylimidzole dimer, a 2-(p-methoxyphenyl)-4,5-diphenylimodazole dimer, a 2-di(p-methoxyphenyl)-5-phenylimidazole dimer, a 2-(2,4-dimethoxyphenyl)-4,5-diphenylimidazole dimmer, a 2,4,5-triarylimidazole dimmer, benzyl dimethyl ketal, 2-benzyl-2-dimethylamino-1-(4-morpholinophenyl)butane-1-one, 2-methyl-1-[4-(methylthio)phenyl]-2-morpholino-1-propane, 2-hydroxy-2-methyl-1-phenyl-propane-1-one, 1-[4-(2-hydroxyethoxy)phenyl]-2-hydroxy-2-methyl-1-propane-1-one, phenanthrenequinone, 9,10-phenanthlenequinone; benzoins such as methylbenzoin or ethylbenzoin; acridine derivatives such as 9-phenylacridine and 1,7-bis(9,9'-acridinyl)heptane; and bisacylphosphine oxide; as well as mixtures thereof. The above compounds may be employed individually or in combination.

In addition to these photopolymerization initiators, it is possible to incorporate accelerators. Listed as such examples are ethyl p-dimethylaminobenzoate, isoamyl p-dimethylaminobenzoate, ethanolamine, diethanolamine, and triethanolamine.

In these photopolymerization initiators, it is preferable that side chains undergo grafting to the main hydrophilic chain.

In these active energy ray curable type resins, molecular weight increasing effects per photon is remarkably great, compared to common active energy ray curable type resins which undergo polymerization via a chain reaction, since cross-linking occurs through cross-linking bonds among the side chains of the main chain which originally exhibits a certain degree of polymerization. On the other hand, in the conventional resins heretofore known, it is impossible to control a number of cross-linking points, and then, the physical properties of film after curing is also impossible, resulting in easily a hard and fragile film.

In Polymer A employed in this invention, it is possible to completely control the number of cross-linking points based on the length of the main hydrophilic chain and the introduction amount of the side chains, whereby it is possible to control physical properties of an ink layer in accordance with aims. Further, conventional active energy ray curable type ink is composed of curable components within almost all ink portions of the ink except for color materials, whereby ink dots are raised after curing and image quality represented by glossiness is degraded. On the other hand, the necessary amount of Polymer A employed in this invention is decreased, resulting in an increase in the amount of components which are removed by evaporation during drying, whereby image quality after drying is enhanced and fixability is also good.

### Polymer B

Polymer B of this invention is a copolymer obtained from a carboxylic acid containing monomer neutralized with an amine compound and a nonionic monomer having a hydrophobic moiety capable of adsorption onto the pigment, and is characterized by a weight-average molecular weight of 5,000 - 100,000, and an acid value of 50 - 500 mgKOH/g.

In the ink-jet ink of this invention, when Polymer B is employed in combination with Polymer A of this invention, it is found that water resistance of printed images and adhesiveness to the base material of printed images are enhanced, since an amine compound vaporizes after the ink is deposited, and the remaining polymer portions of Polymer B become firmly solidified with coexisting pigment and to Polymer A of this invention. Further, since Polymer B of this invention features a characteristic of good compatibility with Polymer A, which exists after vaporization of the volatile components in the ink or after penetration of the penetration components in the ink, this invention also provides the desired effect of excellent texture of the printed image, such as glossiness.

From the viewpoint of compatibility of Polymer A of this invention and Polymer B of this invention after vaporization of volatile components in the ink, as a result of close examination, it was found that Polymer B employed in this invention exhibits the following desirable characteristics.

The weight-average molecular weight of Polymer B is commonly 5,000 - 100,000, but is preferably 10,000 - 60,000. In cases when the weight-average molecular weight is more than 5,000, texture of the formed images, such as glossiness, increases, while when it is less than 100,000, good ejection stability is attained.

The acid value is commonly more than 50 but less than 500 mgKOH/g, and further, is preferably 100 - 250 mgKOH/g. In cases when the acid value is 100 - 500 mgKOH/g, storage stability of the ink increases, and further, when it is less than 250 mgKOH/g, sufficient water resistance is attained.

The carboxylic acid containing monomer composing Polymer B of this invention preferably contains an addition polymerizable vinyl group, examples of which monomers include, for example, acrylic acid, methacrylic acid, and stearic acid. The carboxylic acid containing monomers may be employed individually or in combinations of at least two types.

The nonionic monomer, employed in this invention, which has a hydrophobic moiety capable of adsorption to the pigment, preferably contains an addition polymerizable vinyl group, and examples of the hydrophobic moiety capable of adsorption onto the pigment include styrene, styrene derivatives, vinylnaphthalene, vinylnaphthalene derivatives, and acrylonitrile. The nonionic monomers may be employed individually or in combinations of at least two types.

As a structure of Polymer B of this invention, listed are, for example, a styrene-acrylic acid-acrylic acid alkyl ester copolymer, styrene-acrylic acid copolymer, styrene-maleic acid copolymer, styrene-maleic acid-acrylic acid alkyl ester copolymer, styrene-methacrylic acid copolymer, styrene-methacrylic acid-acrylic acid alkyl ester copolymer, styrene-maleic acid half ester copolymer, vinyl naphthalene-acrylic acid copolymer And vinyl naphthalene-maleic acid copolymer. These water-soluble resins may be employed in combinations of at least two kinds.

Polymer B of this invention is preferably employed as a water-soluble polymer dispersing agent to stably disperse the pigment in the ink during dispersion of pigment.

The solid content of Polymer B of this invention is preferably 5 - 200 weight% compared to the pigment. In cases when the content of Polymer B is at least 10 weight% compared to the pigment, sufficient abrasion resistance and water resistance can be attained, while when it is at most 200 weight%, ejection properties at the nozzles after short term termination, also known as intermittent ejection properties, remain acceptable.

In Polymer B of this invention, it is preferable that more than 60% of the total acid value is neutralized.

The amine compounds employed in Polymer B of this invention include, for example, alcohol amine compounds and aliphatic amine compounds. As alcohol amine compounds, listed are, for example, monoethanolamine, diethanolamine, triethanolamine, methylethanolamine, N,N-dimethylethanolamine, and dibutylethanolamine. As aliphatic amine compounds, listed are, for example, ammonia, monomethylamine, dimethylamine, trimethylamine, and 1,4-diazabicyclo[2,2,2]octane.

Since further water resistance, fixability and glossiness of the formed image can be provided by volatilization of the amine compound after the ink deposition onto the recording medium, the boiling point of the amine compounds is preferably at most 200 °C. From this viewpoint, specifically preferable are ammonia, N,N-dimethylethanolamine, methylethanolamine, monoethanolamine, and 1,4-diazabicyclo[2,2,2]octane.

### Pigment

The ink-jet ink of this invention is characterized in that a pigment is employed as a colorant (also referred to as a color material).

Employed as viable pigments in the present invention may be conventional organic or inorganic pigments known in the art. Examples include, for example, organic pigments of azo pigments such as azo lakes, insoluble azo pigments, condensed azo pigments, or chelate azo pigments; polycyclic pigments such as phthalocyanine pigments, perylene and perylene pigments, antharaquinone pigments, quinacridone pigments, dioxazine pigments, thioindigo pigments, iso-indolinone pigments, or quinophtahrony pigments; dye lakes such as basic dye type lakes or acidic dye type lakes; nitro pigments; nitroso pigments; aniline black; or daylight fluorescent pigments; as well as inorganic pigments such as carbon black, but this invention is not limited to these examples.

Listed as pigments for magenta or red are C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48 : 1, C.I. Pigment Red 53 : 1, C.I. Pigment Red 57 : 1, C.I. Pigment Red 122, C.I. Pigment Red 123, C.I. Pigment Red 139, C.I. Pigment Red 144, C.I. Pigment Red 149, C.I. Pigment Red 166, C.I. Pigment Red 177, C.I. Pigment Red 178, and C.I. Pigment Red 222.

Listed as pigments for orange or yellow are C.I. Pigment Orange 31 and C.I. Pigment Orange 43, as well as C.I. Pigment Yellow 12, C.I. Pigment Yellow 13, C.I. Pigment Yellow 14, C.I. Pigment Yellow 15, C.I. Pigment Yellow 17, C.I. Pigment Yellow 74, C.I. Pigment Yellow 93, C.I. Pigment Yellow 94, C.I. Pigment Yellow 128, C.I. Pigment Yellow 138, and C.I. Pigment Yellow 180.

Listed as pigments for green or cyan are C.I. Pigment Blue 15, C.I. Pigment Blue 15 : 2, C.I. Pigment Blue 15 : 3, C.I. Pigment Blue 15 : 4, C.I. Pigment Blue 16, C.I. Pigment Blue 60, and C.I. Pigment Green 7.

Further, in the ink-jet ink of this invention, it is possible to employ self-dispersion pigments as a colorant. Self-dispersion pigments, as described herein, refer to those pigments which can be dispersed in the absense of a dispersing agent. Specifically preferred are pigment particles having a polar group on their surface.

Pigment particles featuring a polar group on their surface, as described herein, refer to pigments in which the surface of pigment particles is directly modified with a polar group, or those in which polar groups bond, either directly or via a joint group, organic compounds having an organic pigment mother nucleus (hereinafter, referred to as a pigment derivatives).

Examples of such a polar group include a sulfonic acid group, a carboxylic acid group, a phosphoric acid group, a boric acid group, and a hydroxyl group. Of these, preferred are the sulfonic acid group and the carboxylic acids group, of which from the viewpoint of water resistance more preferred is the carboxylic acid group.

Some methods for preparing pigment particles featuring polar groups on their surfaces are disclosed in, for example, WO97/48769, JP-A Nos. 10-110129, 11-246807, 11-57458, 11-189739, 11-323232, and 2000-265094. These methods respectively apply a polar group such as a sulfonic acid group or its salt to at least part of the surface of pigment particles by treating the surfaces with an adequate oxidizing agent. Specifically, particle surfaces may be treated by oxidizing carbon black with concentrated nitric acid, or oxidizing the surfaces of color pigments with sulfamic acid, sulfonated pyridine salts, sulfuric amidic, and other appropriate ones in Sulfolane or N-methyl-2-pyrrolidone. If the particle surfaces are excessively oxidized in the above reactions, the particles become water-soluble and can be easily removed. With this process, a pigment dispersing liquid can be obtained. When pigment surfaces are oxidized to introduce acidic groups on the surfaces, the acidic groups on the pigment surfaces can be neutralized with a basic compound, as appropriate.

Listed as other methods are those in which pigment derivatives are adsorbed onto the pigment particle surface using a treatment, such as milling, as described in JP-A Nos. 11-49974, 2000-273383, and 2000-303014, or a method in which a pigment is dissolved into a solvent together with the pigment derivatives, after which the particles are crystallized in a poor solvent, as described in JP-A Nos. 2002-179977 and 2002-201401. With either method, pigment particles, having polar groups on their surfaces, are easily obtained.

In the present invention, polar groups may be free or in the state of salts, or may have a counter-salt. As a counter salt, listed are, for example, inorganic salts (e.g. lithium, sodium, potassium, magnesium, calcium, aluminum, and nickel); and organic salts (e.g. ammonium, triethyl ammonium, diethyl ammonium, pyridinium, triethanol ammonium) of which preferable is a counter-salt exhibiting a valence of one.

Listed as methods for dispersing pigments are those employing various homogenizers such as a ball mill, a sand mill, an attritor, a roller mill, an agitator, a Henschel mixer, a colloid mill, an ultrasonic homogenizer, a pearl mill, a wet system jet mill, or a paint shaker. Further, it is preferable to employ centrifuges and filters to remove any coarse particles or aggregates in the pigment dispersion.

A pigment is generally dispersed with a common dispersion method well known in the art by use of a dispersing agent, and applicable dispersing agents include an anionic surface active agent, a nonionic surface active agent and a water-soluble polymer dispersing agent.

The content of the color material in the ink of this invention is preferably 1 - 20 weight% of the total quantity of the ink.

From the viewpoint of ejection stability, the average secondary particle diameter of pigment dispersions employed in the ink of the present invention is preferably at most 500 nm, and is more preferably at most 200 nm,.

### Ink-jet Ink Set

The ink-jet ink set of this invention is comprised of at least two kinds of ink-jet inks, at least one of which is an ink-jet ink containing Polymer A of this invention, exhibiting a plurality of side chains in the hydrophilic main chain and capable of cross-linking with an active ray irradiation, and Polymer B of this invention, which is a copolymer obtained from a carboxylic acid containing monomer neutralized with an amine compound and a nonionic monomer having a hydrophobic moiety capable of adsorption onto the pigment, the weight-average molecular weight of which is not less than 5,000, and not more than 100,000, and an acid value of which is not less than 50 mgKOH, and not more than 500 mgKOH.

Different hue inks composing the ink-jet ink set of this invention include a yellow, magenta, cyan and black ink.

Further, adding to the above four color inks, a light-color cyan ink, a light-color magenta ink, a deep-color yellow ink and a light-color black ink (being a gray ink) may be employed. Further, so-called special color ink, such as a blue, red, green, orange, or violet may be employed.

### Water-soluble Organic Solvent

The ink of this invention preferably contains a water-soluble organic solvent. As a water-soluble organic solvent employable in this invention, listed are, for example, alcohols (such as methanol, ethanol, propanol, isopropanol, butanol, isobutanol, secondary butanol, tertiary butanol, pentanol, hexanol, cyclohexanol and benzyl alcohol); polyhydric alcohols (such as ethylene glycol, diethylene glycol, triethylene glycol, polyethylene glycol, propylene glycol, dipropylene glycol, polypropylene glycol, butylene glycol, hexanediol, pentanediol, glycerin, hexanetriol and thiodiglycol); polyhydric alcohol ethers (such as ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, propylene glycol monomethyl ether, propylene glycol monobutyl ether, ethylene glycol monomethyl ether acetate, triethylene glycol monomethyl ether, triethylene glycol monoethyl ether, triethylene glycol monobutyl ether, ethylene glycol monophenyl ether and propylene glycol monophenyl ether); amines (such as ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyl diethylenetriamine and tetramethyl propylenediamine); amides (such as formamide, N,N-dimethyl formamide and N,N-dimethylacetoamide); heterocyclic rings (such as 2-pyrrolidone, N-methyl-2-pyrrolidone, cyclohexyl pyrrolidone, 2-oxazolidone, and 1,3-dimethyl-2-imidazolydinone); sulfoxides (such as dimethylsulfoxide); sulfones (such as sulfolane); urea; acetonitrile; or acetone.

The water-soluble organic solvent may be employed alone or in combination of several kinds. The added amount of the water-soluble organic solvents in the ink is typically 5 - 80 weight% of the total volume, but preferably 10 - 50 weight%. In cases when the added amount is more than 5 weight%, it is possible to maintain good ejection property, while at less than 80 weight%, less-sticky images, after active energy ray irradiation, can be obtained even on non-absorptive recording media.

### Other Additives in Ink-jet Ink

In this invention, various additives, well-known in the art, other than the above additives may be incorporated. These are, for example, a fluorescent brightening agent, a defoaming agent, a lubricant, a preservative, a viscosity increasing agent, an antistatic agent, a matting agent, a water-soluble polyvalent metal salt, a pH adjuster such as an acid-base buffer solution, an antioxidizing agent, a surface tension adjusting agent, a specific resistance controlling agent, and a rust-preventing agent.

### Cross-linking Agent

In the ink-jet ink of this invention, a cross-linking agent may be incorporated. Specific examples of cross-linking agents include, for example, epoxy curing agents (such as, diglycidyl ethyl ether, ethylene glycol diglycidyl, 1,4-butanediol diglycidyl ether, 1,6-diglycidyl cyclohexane, N,N-diglycidyl-4-glycidyloxy aniline, sorbitol polyglycidyl ether, and glycerol polyglycidyl ether); aldehyde curing agents (such as formaldehyde, and glyoxal); active halogen curing agents (such as 2,4-dichloro-4-hydroxy-1,3,5-s-triazine); active vinyl compounds (1,3,5-trisacruloyl-hexahydro-s-triazine, and bisvinylsulfonylmethyl ether); aluminum alum; and boric acid or its salt.

### Surface Active Agent

As a preferably employable surface active agent in the ink-jet ink of the present invention, listed are anionic surface active agents, such as an alkyl sulfate, an alkyl ester sulfate, dialkylsulfosuccinic acid salts, alkylnaphthalenesulfonic acid salts, an alkylphosphoric acid salt, a polyoxyalkylene alkyl ether phosphoric acid salt, or fatty acid salts; nonionic surface active agents, such as polyoxyethylene alkyl ethers, polyoxyalkylene alkyl phenyl ethers, acetylene glycols, or polyoxyethylene-polyoxypropylene block copolymers; cationic surface active agents such as alkylamine salts or quaternary ammonium salts; as well as a silicon series surface active agent and a fluorine series surface active agent.

### Recording Medium

As an applicable recording medium for the recording method of the ink-jet ink of this invention, widely employed is an absorptive recording medium, such as plain paper, or high-quality paper; a low absorptive recording medium, such as art paper or coated paper; a non-absorptive recording medium, such as plastic film; and a recording medium specifically made for the ink-jet ink, but the effects of the ink-jet ink of this invention are most effectively achieved by application of the ink-jet ink of this invention onto recording method employing the recording medium of low absorptive, non-absorptive, or plain paper.

Paper includes coated paper and non-coated paper. Coated paper includes art paper in which the coated amount on one side is approximately 20 g/m², coated paper in which the coated amount on one side is approximately 10 g/m², light weight coated paper in which the coated amount on one side is approximately 5 g /m², ultra-light weight coated paper, matte finished coated paper, dull paper, and newsprint paper. Non-coated paper includes printing paper A employing 100% chemical pulp, printing paper B employing at least 70% chemical pulp, printing paper C employing from 40 - 70% chemical pulp, printing paper D employing at most 40% chemical pulp, and gravure paper which incorporates mechanical pulp and has been subjected to calendering. More details on paper are described in "Saishin Kamikako Binran (Handbbok of Recent Paper Treatments)", edited by Kako Binran Henshuiinkai, published by Tech. Times and "Insatsu Kogaku Binran (Printing Engineering Handbook)", edited by Nihon Insatsu Gakkai (The Japanese Society of Printing Science and Technology).

Employed as plain paper, are 80 - 200 µm thick non-coated types of paper which are considered as non-coated paper, special printing paper, and information paper. Examples of plain paper employable in this invention include high quality printing paper, medium quality printing paper, and low quality printing paper, thin printing paper, ultra-light weight coated printing paper, or special printing paper such as high quality colored paper, form paper sheets, PPC sheets, and other kinds such as information sheets. Specifically, available is paper described below and various modified/treated papers, but the present invention is not limited thereto.

Listed are HIGH QUALITY PAPER, HIGH QUALITY COLORED PAPER, RECYCLED PAPER, COPYING PAPER/COLOR, OCR PAPER, NON-CARBON PAPER/COLOR, SYNTHETIC PAPER such as UPO 60, 80, and 110 MICRON, or UPOCOAT 70 and 90 MICRON, others such as ONE SIDE ART PAPER 68 kg, COATED PAPER 90 kg, MATTE FORM PAPER 70, 90, and 110 kg, FOAMED PET 38 micron, and MITSUORIKUN (all available from Kobayashi Kirokushi Co., Ltd.), OK HIGH QUALITY PAPER, NEW OK HIGH QUALITY PAPER, SUN FLOWER, PHOENIX, OK ROYAL WHITE, HIGH QUALITY EXPORT PAPER (NPP, NCP, NWP, and ROYAL WHITE), OK BOOK PAPER, OK CREAM BOOK PAPER, CREAM HIGH QUALITY PAPER, OK MAP PAPER, OK ISHIKARI, KYUUREI, OK FORM, OKH, and NIP-N (all available from Shin-Oji Paper Co., Ltd.); KINO, TOKO, EXPORT HIGH QUALITY PAPER, SPECIAL DEMAND HIGH QUALITY PAPER, BOOK PAPER, BOOK PAPER L, PALE CREAM BOOK PAPER, PRIMARY SCHOOL SCIENCE TEXT BOOK PAPER, CONTINUOUS SLIP PAPER, HIGH QUALITY NIP PAPER, GINKAN, KINYO, KINYO (W), BRIDGE, CAPITAL, GINKAN BOOK PAPER, HARP, HARP CREAM, SK COLOR, SECURITY PAPER, OPERA CREAM, OPERA, KYP CARTE, SYLVIA HN, EXCELLENT FORM, and NPI FORM DX (all available from Nippon Paper Co., Ltd.); PEARL, KINRYO, PALE CREAM HIGH QUALITY PAPER, SPECIAL BOOK PAPER, SUPER BOOK PAPER, DIAFORM, and INK-JET FORM (all available from Mitsubishi Paper Mills, Ltd.); KINMO V, KINMO SW, HAKUZO, HIGH QUALITY PUBLISHING PAPER, CREAM KINMO, CREAM HAKUZO, SECURITY/TRADABLE COUPON PAPER, BOOK PAPER, MAP PAPER, COPY PAPER, and HNF (all available from Hokuetsu Paper Mills, Ltd.); SIORAI, TELEPHONE DIRECTORY COVER, BOOK PAPER, CREAM SHIORAI, CREAM SHIORAI MEDIUM ROUGH, CREAM SHIORAI HIGH ROUGH, and DSK (all available from Daishowa Paper Manufacturing Co., Ltd.); SENDAI MP HIGH QUALITY PAPER, KINKO, RAICHO HIGH QUALITY, HANGING PAPER, COLORED PAPER BASE PAPER, DICTIONARY PAPER, CREAM BOOK, WHITE BOOK, CREAM HIGH QUALITY PAPER, MAP PAPER, and CONTINUOUS SLIP PAPER (Chuetsu Paper & Pulp Co., Ltd.); OP KINO (CHUETSU), KINSA, REFERENCE PAPER, TRADABLE COUPON PAPER (WHITE)), FORM PRINTING PAPER, KRF, WHITE FORM, COLOR FORM, (K)NIP, FINE PPC, and KISHU INK-JET PAPER (all produced by Kishu Paper Co., Ltd.); TAIOU, BRIGHT FORM, KANT, KANT WHITE, DANTE, CM PAPER, DANTE COMIC, HEINE, PAPER BACKS PAPER, HEINE S, NEW AD PAPER, UTRILLO EXCEL, EXCEL SUPER A, KANTO EXCEL, EXCEL SUPER B, DANTE EXCEL, HEINE EXCEL, EXCEL SUPER C, EXCEL SUPER D, AD EXCEL, EXCEL SUPER E, NEW BRIGHT FORM, and NEW BRIGHT NIP (all available from Daio Paper Corporation); NICHIRIN, GETSURIN, UNREI, GINGA, HAKUUN, WAISU, GETURIN ACE, HAKUUN ACE, and UNKIN ACE (all produced by Japan Paper Industry Co., Ltd.); TAIOU, BRIGHT FORM and BRIGHT NIP (all available from Nagoya Pulp Co., Ltd.); BOTAN A, KINBATO, TOKU BOTAN, SHIROBOTAN A, SHIROBOTAN C, GINBATO, SUPER SHIROBOTAN A, PALE CREAM SHIROBOTAN, SPECIAL MEDIUM QUALITY PAPER, SHIROBATO, SUPER MEDIUM QUALITY PAPER, AO BATO, AKA BATO, KIN BATO M SNOW VISION, KIN BATO SNOW VISION, SHIRO BATO M, SUPER DX, HANAMASU O, AKA BATO M, and HK SUPER PRINTING PAPER (all manufactured by Honshu Paper Co., Ltd.); STAR LINDEN (A·AW), STAR ELM, STAR MAPLE, STAR LAUREL; STAR POPLAR, MOP, STAR CHERRY I, CHERRY I SUPER, CHERRY II SUPER, STAR CHERRY III, STAR CHERRY IV, CHERRY III SUPER, and CHERRY IV SUPER (all produced by Marusumi Paper Co., Ltd.); SHF (produced by Toyo Pulp Co., Ltd.); and TRP (produced by Tokai Pulp Co., Ltd.).

Employed as various films may be any of those which are commonly employed. Examples include polyethylene terephthalate film, polyester film, polyolefin film, polyvinyl chloride film, and polyvinylidene chloride film. Further employed may be resin-coated paper of photographic printing paper and synthetic paper such as yupo paper.

Various ink-jet recording media are those which incorporate, as a substrate, an absorptive, or non-absorptive support having thereon an ink absorptive layer. Some ink absorptive layers are composed of a coating layer, a swelling layer and a microscopic void layer.

In the above swelling layer, ink is absorbed via swelling of the ink absorptive layer composed of water-soluble polymers. The microscopic void layer is composed of microscopic inorganic or organic particles at a secondary particle diameter of about 20 - about 200 nm, as well as binders, and microscopic voids of about 100 nm to absorb the ink.

In recent years, in term of photographic image recording, preferably employed is an ink-jet recording medium provided with the above microscopic void layer onto RC paper, serving as a base material, in which both sides of the paper base material are coated with an olefin resin.

### Ink-jet Recording Method

The ink-jet recording method of this invention is characterized by ejecting the ink-jet ink or ink-jet ink set onto the recording medium after which the ink is dried after it is cured by radiation of active energy rays. The ink-jet ink of this invention contains Polymer A, which has a plurality of side chains in the hydrophilic main chain, and is capable of cross-linking among the side chains by radiation of active energy rays.

A method of active energy ray radiation to the ink-jet ink is now described.

### Active Energy Ray Radiation

### Active Energy Rays

Active energy rays of this invention include, for example, electron beams, ultraviolet rays, α-rays, β-rays, γ-rays, and X-rays. In view of safety to the operator, ease of handling, and wide industrial application, electron beams or ultraviolet rays are preferred. In this invention, specifically preferable are ultraviolet rays.

In cases when electron beams are employed, the exposure amount of electron beams is preferably in the range of 0.1 - 30 Mrad. When the amount is less than 0.1 Mrad, desired exposure effects are not obtained, while when it exceeds 30 Mrad, the support may be degraded. Consequently, neither extreme is preferred.

When ultraviolet rays are employed, employed as a radiation source may be conventional prior-art sources such as low, medium, or high pressure mercury lamps at an operation pressure of several 100 Pa - 1 MPa, metal halide lamps, xenon lamps exhibiting an emission wavelength in the ultraviolet regions, cold-cathode tubes, hot-cathode tubes, or LEDs.

### Radiation Exposure Conditions after Ink Deposition

As active energy ray radiation conditions, it is preferable that active energy rays are exposed 0.001 - 1.0 second after ink deposition onto the recording medium, but is more preferably 0.001 - 0.5 seconds. In order to form highly detailed quality images, it is essential that the exposure is performed as soon as possible after ink deposition.

### Exposure Method of Active Energy Rays

The basic exposure method of active energy rays is disclosed in JP-A 60-132767, according to which radiation sources are provided on both sides of a head unit, whereby the head and the radiation sources are scanned employing shuttle-type image printing devices. Exposure is performed at an elapse of a specific period after ink deposition. Further, curing is completed employing another radiation source, which is stationary. U.S. Patent No. 6,145,979 discloses other exposure methods such as a method employing optical fibers, or a method in which a collimated radiation is incident to a mirror surface provided on the side of the head unit, whereby ultraviolet rays are exposed onto the recording section. Any of these exposure methods may be applied to the ink-jet recording method of the present invention, as appropriate.

Further, one of the preferred embodiments is that active energy ray exposure is divided into two steps, during which, initially active energy rays are exposed 0.001 - 2.0 seconds after ink deposition on the medium employing the foregoing method, followed by an additional active energy ray exposure. By dividing the active energy ray exposure into two stages, it is possible to reduce contraction of recording materials, which commonly occurs during ink curing.

### Drying after Curing Treatment

In the ink-jet ink recording method of this invention, drying is conducted to remove any unnecessary water-soluble organic solvent, after the ink-jet ink ejected onto the recording medium is cured due to radiation of the active energy rays.

An ink drying means is not specifically limited, but employable may be, for example, a method to dry the recording medium by contact of the reverse surface of the medium to a heating roller or a flat heater, a method to blow hot air onto the printed surface employing a dryer, a method to remove volatile components with a decompression treatment, or a method to employ drying equipment using a far-infrared radiation source or microwave drying equipment, selected as appropriate or in combination.

### EXAMPLE

The present invention will now be specifically described with reference to examples, however the present invention is not limited thereto. In these Examples, the expression "parts" or "%" is employed, which represents weight parts or weight%, unless otherwise noted.

### Synthesis of Polymer A

### Synthesis of Polymer A1

In 750 g of methanol, 100 g of polyacrylic acid (at a weight average molecular weight of 800,000) was dissolved while heating, after which 16 g of 4-hydroxybutylacrylate glycidyl ether, and 11 g of pyridine serving as a catalyst, were added. The resulting mixture was maintained at 60 °C while stirring for 24 hours. After which, the system was heated to 95 °C and methanol was distilled out while dripping water, after which the resulting system was subjected to an ion exchange resin treatment (employing PK-216H, produced by Mitsubishi Chemical Corp.), to remove the pyridine, resulting in an aqueous solution at a 15% concentration of non-volatile components. Subsequently, the above aqueous solution was mixed with IRUGACURE 2959 (produced by Ciba Specialty Chemicals, Ltd.) at an amount of 0.1 g per 100 g of the above 15% aqueous solution, after which the resulting mixture was diluted with ion-exchanged water, whereby a 10% aqueous solution of Polymer A1 was prepared.

### Synthesis of Polymer A2

Charged into a reaction vessel were 56 g of glycidyl methacrylate, 48 g of p-hyroxybenzaldehyde, 2 g of pyridine, and 1 g of N-nitroso-phenylhydroxyamine ammonium salt, after which the resulting mixture was stirred over 8 hours in an 80 °C water bath. Subsequently, after dispersing 45 g of saponified polyvinyl acetate of a 2,200 polymerization degree and an 88% saponification ratio into 225 g of ion-exchanged water, added to the resulting dispersion were 4.5 g of phosphoric acid and p-(3-methacryloxy-2-hydroxypropyloxy)benzaldehyde in an amount to result in a modification ratio of 3.0 mol% with respect to polyvinyl alcohol, and then the resulting mixture was stirred for 6 hours at 90 °C, and finally cooled to room temperature. Thereafter, 30 g of a basic ion exchange resin was added and the resulting mixture was stirred for one hour. Subsequently, the above ion exchange resin was removed by filtration, and IRUGACURE 2959 (produced by Ciba Specialty Chemicals, Ltd.) serving as a photopolymerization initiator was then mixed in an amount of 0.1 g per 100 g of the 15% aqueous solution. Thereafter, the resulting mixture was diluted by the addition of ion-exchanged water, whereby 10% aqueous solution labeled as Polymer A2 was prepared.

### Synthesis of Polymers A3 - A7

Polymers A3 - A7 were synthesized in the same manner as Polymer A2, except that the polymerization degree and the saponification ratio of the saponified products were controlled as listed in Table 1, and further, the introduction modification ratio was also controlled by varying the addition amount of p-(3-methacryloxy-2-hydroxypropyloxy)benzaldehyde. Subsequently, 10% aqueous solutions designated as Polymers A3 - A7 were prepared. Polymer A8

A compound in which R of foregoing Formula (4) is p-phenylene group (at a PVA polymerization degree of 500, a saponification ratio of 88%, and a modification ratio of 3 mol% in the main chain, produced by Toyo Synthetic Industries, Co.), was diluted by addition of ion-exchanged water, and subsequently a 10% aqueous solution, labeled as Polymer A8 was prepared.

### Polymer A9

A water-based ultraviolet ray curable type urethane acrylate resin emulsion (under the product name of WBR-839, at a solid content of 40%, produced by Taisei Kako Co., Ltd.) was diluted by addition of ion-exchanged water, to prepare a 10% aqueous solution, labeled as Polymer A9.

### Synthesis of Polymer B

### Synthesis of Polymer B1

Into a 3 L four-neck flask provided with a dripping device, a thermometer, a nitrogen gas introducing pipe, a stirrer, and a reflux condenser pipe, added was 700 g of methyl ethyl ketone, and heated to 70 °C while nitrogen substitution under stirring. A temperature in the flask was maintained at 70 °C, a mixture of 200 g of acrylic acid, 100 g of α-methylstyrene, 500 g of styrene, 100 g of etylmethecrylate, and 10 g of AIBN (being azobisisobutyronitrile), was added over 3 hours and allowed to react. After the addition, 2 g of AIBN was further added to the mixture 5 hours and again 8 hours later, and further, 1 g of AIBN was added 12 hours and again 16 hours later. Further, 300 g of methyl ethyl ketone was added 4 hours later after completion of addition of the monomer additive. Then, 24 hours later after completion of addition of the monomer mixture, the temperature of the flask was reduced to terminate the reaction, resulting in a methyl ethyl ketone solution labeled as Polymer B1.

This methyl ethyl ketone solution, Polymer B1, was poured into a large volume of methanol and stirred. Polymer B1 precipitated in the methanol was separated from the solvents employing a glass filter, and further, washed with methanol, and dried employing heat and reduced-pressure drying equipment. Obtained Polymer B1 exhibited an acid value of 150 mgKOH/g and a weight average molecular weight of 20,000 as a polystyrene equivalent. To 100 g of a 2% ammonium aqueous solution, dissolved was 20 g of Polymer B1, to obtain an 18% aqueous solution labeled as Polymer B1. Synthesis of Polymers B2 - B5

Separate 18% aqueous solutions labeled as Polymers B2 - B5, were obtained in the same manner as synthesis of above Polymer B1, except that the component ratio and concentration of the monomers in the reaction liquid were varied, and the weight average molecular weight and the acid value of each Polymer B2 - B5 are described as in Table 1.

### Synthesis of Polymer B6

An 18% aqueous solution labeled as Polymers B6 was obtained in the same manner as synthesis of above Polymer B1, except that 100 g of a 2% ammonium aqueous solution was replaced with 130 g of a 5% diethanolamine aqueous solution. Synthesis of Polymer B7

An 18% aqueous solution labeled as Polymer B7 was obtained in the same manner as synthesis of above Polymer B1, except that 100 g of a 2% ammonium aqueous solution was replaced with 110 g of a 2.5% NaOH aqueous solution. Synthesis of Polymer B8

An 18% aqueous solution labeled as Polymer B8 exhibiting a molecular weight of 20,000 and an acid value of 150 mgKOH/g was obtained in the same manner as synthesis of above Polymer B1, except that the acrylic acid was replaced with vinyl sulfonic acid and the component ratio and concentration of the monomers in the reaction liquid were varied.

### Preparation of Ink Set

Ink Sets 1 - 14 were prepared as described below.

### Preparation of Ink Sets 1 - 14

### Preparation of Pigment Dispersion Liquid

### Preparation of Magenta Pigment Dispersion Liquid

The following additives were mixed, and the resulting mixture was dispersed employing a sand grinder charged with 0.6 mm zirconia beads at a volume ratio of 50%, whereby a magenta pigment dispersion liquid at a 15% magenta pigment content was prepared. The average diameter of magenta pigment particles, incorporated in the resulting magenta pigment dispersion liquid, was 90 nm. The particle diameter was determined employing ZETA SIZER 1000HS, produced by Malvern, Inc.

| | |
|---|---|
| C. I. Pigment 122 | 15 parts |
| JOHNCRYL 61 (a 30% solid styrene-acryl based resinous dispersant, produced by Johnson Co.) | 10 parts |
| Glycerin | 15 parts |
| Ion-exchanged water | 67 parts |

### Preparation of Black Pigment Dispersion Liquid

Cabojet 300, a carbon black self-dispersion product, produced by Cabot Corp., was diluted by addition of ion-exchanged water, whereby a carbon black pigment dispersion, incorporating 15% carbon black, was prepared. The average particle diameter of carbon-black particles, incorporated in the resulting black pigment dispersion liquid, was 148 nm, which was determined employing ZETER SIZER 1000HS, a product of Malvern, Inc.

### Preparation of Ink Set 1

Magenta Pigment Ink 1 and Black Pigment Ink 1 were prepared with the following method, and the combination of Magenta Pigment Ink 1 and Black Pigment Ink 1 was designated as Ink Set 1.

### Preparation of Magenta Pigment Ink 1

| | |
|---|---|
| Magenta pigment dispersion Liquid (15% solids) | 20 parts |
| Aqueous Solution of Polymer A1 (10% solids) | 28 parts |
| Aqueous Solution of Polymer B1 (10% solids) | 25 parts |
| Ethylene glycol | 15 parts |
| 1,2-Hexanediol | 5 parts |
| OLFIN E1010 (produced by Nissin Chemical Co., Ltd.) | 1 part |

The total volume was brought to 100 parts by addition of ion-exchanged water.

### Preparation of Black Pigment Ink 1

Black Pigment Ink 1 was prepared in the same manner as above Magenta Pigment Ink 1, except that the Magenta Pigment Dispersion Liquid was replaced with a Black Pigment

### Dispersion Liquid.

### Preparation of Ink Sets 2 - 14

Ink Sets 2 - 14 were prepared in the same manner as above Ink Set 1, except that the kinds of Polymer A and Polymer B, and the added amount of solid content (in weight%) were changed as described in Table 1.

**Table 1**

| Ink set No. | Polymer A | | | | Polymer B | | | | | Remarks |
|---|---|---|---|---|---|---|---|---|---|---|
| | No. | Saponification ratio(%) | *1 | Modification ratio (mol%) | No. | Molecular weight | Acid value (mgKOH/g) | *2 (weight%) | Neutralizing base | |
| 1 | A1 | - | - | - | B1 | 20000 | 150 | 150 | NH₃ | Inv. |
| 2 | A2 | 88 | 2200 | 3.0 | B1 | 20000 | 150 | 5 | NH₃ | Inv. |
| 3 | A3 | 88 | 1500 | 3.0 | B1 | 20000 | 150 | 210 | NH₃ | Inv. |
| 4 | A4 | 88 | 150 | 3.0 | B6 | 20000 | 150 | 150 | Diethanol amine | Inv. |
| 5 | A5 | 88 | 500 | 0.5 | B4 | 20000 | 280 | 150 | NH₃ | Inv. |
| 6 | A6 | 88 | 500 | 4.5 | B2 | 10000 | 108 | 150 | NH₃ | Inv. |
| 7 | A7 | 88 | 500 | 3.0 | B3 | 50000 | 150 | 150 | NH₃ | Inv. |
| 8 | A8 | 88 | 500 | 3.0 | B5 | 20000 | 80 | 150 | NH₃ | Inv. |
| 9 | A9 | - | - | - | B2 | 10000 | 108 | 150 | NH₃ | Comp. |
| 10 | A9 | - | - | - | B3 | 50000 | 150 | 150 | NH₃ | Comp. |
| 11 | A9 | - | - | - | B4 | 20000 | 280 | 150 | NH₃ | Comp. |
| 12 | A9 | - | - | - | B7 | 20000 | 150 | 150 | Sodium ion | Comp. |
| 13 | A9 | - | - | - | B8 | 20000 | 150 | 150 | NH₃ | Comp. |
| 14 | A9 | - | - | - | B1 | 20000 | 150 | 150 | NH₃ | Comp. |

| | | | | | | | | | | |
|---|---|---|---|---|---|---|---|---|---|---|
| *1_{:} Polimerization degree, *2: A solid content based on a pigment Inv.: This invention, Comp.: Comparative example | | | | | | | | | | |

### Formation and Evaluation of Ink-jet Image

### Continuous Ejection Stability: Nozzle Clogging Resistance

Under an ambience of 20 °C and 50% RH, each of Ink Sets 1 - 14 was loaded in an ink-jet printer fitted with a piezo type head featuring an nozzle orifice diameter of 20 µm, a driving frequency of 10 kHz, and a nozzle number of 128, whereby ejection at 12 pl per ink droplet was continuously conducted for one hour without cleaning. The ejection state was visually observed and continuous ejection stability was evaluated based on the following criteria.
A: normal ejection was noted from all nozzles
B: clogging of 1 - 3 nozzles was noted, but ejection was restored by suction cleaning from the nozzle plane
C: clogging of 4 or more nozzles was noted, while at only one nozzle, it was not possible to restored ejection employing suction cleaning, resulting however in a commercially viable range
D: clogging of 7 or more nozzles was noted, while at two nozzles, it was not possible to restore ejection employing suction cleaning
E: clogging of 10 or more nozzles was noted, while at 3 or more nozzles, it was not possible to restore ejection employing suction cleaning

### Evaluation of Intermittent Ejection Stability

Under an ambience of 20 °C and 50% RH, each of the ink sets was loaded in an ink-jet printer fitted with a piezo type head at a nozzle orifice diameter of 20 µm, a driving frequency of 10 kHz, and 128 nozzles. Under the condition in which 12 pl per ink droplet was ejected, intermittent operation was conducted as 1) continuous ejection for 10 seconds, subsequently, 2) interruption of ejection for a specified period, and 3) a subsequent continuous ejection for 10 seconds. During this operation, the interruption period of 2) was changed via a number of steps of 1 - 40 seconds, and the interruption period was determined so that at the start of the resumption of ejection of 3), non-uniformity was noted in the ejection direction, but it was possible to achieve stable resumption, whereby intermittent ejection stability was evaluated based on the following criteria.
A: stable ejection was possible after an interruption period of 30 - 40 seconds
B: stable ejection was possible after an interruption of 20 - 29 seconds, but when the interruption was at least 30 seconds, non-uniform ejection was noted from some nozzles
C: stable ejection was possible after an interruption of 10 - 19 seconds, but when it was at least 20 seconds, non-uniform ejection was noted from some nozzles
D: stable ejection was possible after an interruption of 5 - 9 seconds, but when the interruption period was at least 10 seconds, non-uniform ejection was noted
E: stable ejection was possible only after a maximum interruption period of 4 seconds

### Evaluation of Color Bleeding Resistance

Each of Ink Sets 1 - 14 was loaded in an on-demand type ink-jet printer at a maximum recording density of 720 x 720 dpi, fitted with a piezo type head at an nozzle orifice diameter of 25 µm, a driving frequency of 12 kHz, 128 nozzles, and a nozzle density of 180 dpi, whereby an image pattern, in which printing, of varying black characters was arranged on a solid magenta image, was outputted on an art paper (NK ART KINFUJI N, produced by Oji Paper Co., Ltd.). The term "dpi" in the present invention means the number of dots per inch or 2.54 cm. Subsequently, each ink was continuously ejected, and exposure was provided 0.01 second after ink deposition onto the recording medium, employing a 200 W/cm² metal halide lamp (MAL 400NL, rated at a power source electricity of 3 kW·hr, produced by Japan Storage Battery Co., Ltd.).

The presence of color mixing on the image, produced as above, was visually observed, and color bleeding resistance was evaluated based on the following criteria.
A: no color mixing was noted
B: slight color mixing was noted but 5-point characters were recognizable
C: some color mixing was noted, but 7-point characters were recognizable, however remaining within the commercially viable range
D: significant color mixing was noted and only 9-point characters were recognizable
E: significant color mixing was noted and even 9-point characters were not recognizable

### Evaluation of Feathering Resistance

Each of Ink Sets 1 - 14 was loaded in an on-demand type ink-jet printer at a maximum recording density of 720 x 720 dpi, fitted with a piezo type head at an nozzle orifice diameter of 25 µm, a driving frequency of 12 kHz, 128 nozzles, and a nozzle density of 180 dpi, whereby 100 µm wide fine black lines were printed onto plain paper (FIRST CLASS PAPER, produced by Konica Minolta Business Technologies, Inc.).

Further, each of the inks was continuously ejected, and exposure was conducted 0.01 second after ink deposition, employing a 200 W/cm² metal halide lamp (mentioned above). The presence of feathering of lines, printed as above, was visually observed and feathering resistance was evaluated based on the following criteria.
A: fine printed lines were clearly recognizable
B: very slight feathering was noted, resulting however in only minor effect to the fine lines
C: slight feathering was noted, but within the commercially viable range
D: obvious feathering was noted, so that the resulting quality was beyond the commercially viable range
E: marked feathering resulted in unclear boundaries of the fine lines, which was totally unacceptable for commercial viability

### Evaluation of Abrasion Resistance

Each of Ink Sets 1 - 14 was loaded in an on-demand type ink-jet printer at a maximum recording density of 720 x 720 dpi, fitted with a piezo type head at nozzle orifice diameter of 25 µm, a driving frequency of 12 kHz, 128 nozzles, and a nozzle density of 180 dpi, whereby a 10 cm x 10 cm solid magenta image was printed on art paper (NK ART KINFUJI N, produced by Oji Paper Co., Ltd.).

Each ink was continuously ejected, and exposure was provided 0.01 second after ink deposition, employing a 200 W/cm² metal halide lamp (MAL 400NL, rated at 3 kW·hr, produced by Japan Storage Battery Co., Ltd.), whereby image evaluation samples were prepared.

After rubbing each image sample, prepared as above, ten times, employing an eraser (MONO, produced by Tombow Pencil Co., Ltd.), any stain formation on the printed portion was visually observed and abrasion resistance was evaluated based on the following criteria.
A: no visible change in the printed image was noted
B: when viewed closely, slight staining of the printed image was noted
C: some staining of the printed image was noted, but the print remained within the commercially viable range
D: obvious staining of the printed image was noted and the print was beyond the commercially viable range
E: the printed image was unacceptably stained, resulting in no commercial viability

### Evaluation of Adhesiveness

Each of Ink Sets 1 - 14 was loaded in an on-demand type ink-jet printer at a maximum recording density of 720 x 720 dpi, fitted with a piezo type head at an nozzle orifice diameter of 25 µm, a driving frequency of 12 kHz, 128 nozzles, and a nozzle density of 180 dpi, and a 10 cm x 10 cm solid magenta image was printed onto PET (polyethylene terephthalate). Each ink was continuously ejected, and exposure was provided 0.01 second after ink deposition, employing a 200 W/cm² metal halide lamp (MAL 400NL, at a power source electricity of 3 kw·hr, produced by Japan Storage Battery Co., Ltd.), whereby image evaluation samples were prepared. Each image sample, prepared as above, was subjected to the cross-cut tape peeling test in accordance with JIS D0202-1988. Employing an adhesive cellophane tape (CT24, produced by Nichiban Co., Ltd.), after the tape was adhered to stick firmly to the surface of film by rubbing with the tip of a finger, the tape was peeled off. Evaluation was based on the number of remaining grids, being those not peeled off, within 100 grids. In cases when the image was not peeled off, it was designated as 100/100, when the image was completely peeled off, it was designated as 0/100. Evaluation of adhesiveness onto a non-adsorptive medium was conducted based on the following criteria.
A: more than 80/100
B: 79/100 - 60/100
C: 59/100 - 40/100, but the print was noted to be within the commercially viable range
D: 39/100 - 10/100, and the print was noted to be beyond the commercially viable range
E: less than 9/100, resulting in absolutely no commercial viability

### Evaluation of Water Resistance

Each of the image evaluation samples were prepared in the same manner as those of the above evaluation of Abrasion Resistance onto art paper (NK ART KINFUJI N, produced by Oji Paper Co., Ltd.) and also onto PET (polyethylene terephthalate). The image surface of each sample was rubbed 5 times with KIMWIPE S-200 (produced by CRECIA Corp.) soaked in water, and any decrease in image density was visually observed, whereby water resistance was evaluated based on the following criteria.
A: no decrease in color density was noted
B: a slight decrease in color density was noted, but the overall image exhibited no commercial viability problem
C: some decrease in color density was noted and slight degradation of image quality was also noted, but the resulting quality was within the commercially viable range
D: an obvious decrease in color density was noted, resulting in a drop of quality beyond the commercially viable range
E: a significant decrease in color density was noted and the image was markedly stained, resulting in unacceptable commercial viability

### Evaluation of Glossiness

Each of the ink sets was loaded in an on-demand type ink-jet printer at a maximum recording density of 720 x 720 dpi, fitted with a piezo type head at an nozzle orifice diameter of 25 µm, a driving frequency of 12 kHz, 128 nozzles, and a nozzle density of 180 dpi, and a 10 cm x 10 cm solid magenta image was printed on art paper (NK ART KINFUJI N, produced by Oji Paper Co., Ltd.).

Further, each ink was continuously ejected, and exposure was conducted 0.01 second after ink deposition, employing a 200 W/cm² metal halide lamp (MAL 400NL, at a power source electricity of 3 kW·hr, produced by Japan Storage Battery Co., Ltd.), whereby image evaluation samples were prepared.

Glossiness of each image evaluation sample was visually observed and evaluated based on the following criteria.
A: a negligible difference in glossiness between the recorded surface and the background was noted, rated as a fully acceptable natural appearance
B: a slight difference in glossiness between the recorded surface and the background was noted
C: a visible difference in glossiness between the recorded surface and the background was noted, but was noted to be within the commercially viable range
D: the difference in glossiness between the recorded surface and the background was obvious, with the glossiness of the recorded surface being less than that of the background
E: a distinct difference in glossiness between the recorded surface and the backgrounds was evident, with the glossiness of the recorded surface being much less than that of the background

### Evaluation of Ink Storage Stability

Each ink set was filled into a glass bottle and sealed to be air tight, and then stored at an ambience of 60 °C for 10 days. Then, the state of each ink was visually observed for precipitates, and storage stability of the ink was evaluated based on the following criteria.
A: no precipitates, in neither the magenta nor the black pigment ink were noted after 10 days of storage
B: precipitates in either the magenta or black pigment ink were noted after 10 days of storage
C: precipitates in either the magenta or black pigment ink were noted after 5 days of storage
D: precipitates were noted in both the magenta and black Pigment inks after 5 days of storage
E: precipitates were noted in both the magenta and black pigment inks after 3 days of storage

### Evaluation of Beading Resistance

By employing a piezo type head at nozzle orifice diameter of 25 µm, a driving frequency of 12 kHz, 128 nozzles, and a nozzle density of 180 dpi, as well as an on-demand type ink-jet printer at a maximum recording density of 720 x 720 dpi, a solid magenta image of 10 cm x 10 cm was printed on art paper (NK ART KINFUJI N, produced by Oji Paper Co., Ltd.) and also on PET (polyethylene terephthalate). The printed solid images were visually observed and beading resistance was evaluated based on the following criteria.

Further, each ink was continuously ejected, and exposure was conducted 0.01 second after ink deposition, employing a 200 W/cm² metal halide lamp (MAL 400NL, at a power source electricity of 3 kW·hr, produced by Japan Storage Battery Co., Ltd.).
A: a uniform image was noted
B: when carefully viewed, mottling noises less than 6 areas were noted
C: when carefully viewed, fewer than 12 mottling areas were noted
D: more than 12 obvious mottling areas were noted
E: at least 20 mottling areas were noted

In the above evaluation, criteria D and E indicated a product exhibiting quality problems from a commercial viability viewpoint.

The results obtained from the above evaluation are shown in Table 2.

**Table 2**

| Ink set No. | *1 | Color bleeding resistance | Beading resistance | | Abrasion resistance | Adhesiveness | Water resistance | | Glossiness | Ejection stability | | *4 | Remarks |
|---|---|---|---|---|---|---|---|---|---|---|---|---|---|
| | Plain paper | Art paper | Art paper | PET | Art paper | PET | Art paper | PET | Art paper | *2 | *3 | | |
| 1 | B | B | A | B | B | B | B | B | B | B | B | A | Inv. |
| 2 | A | A | A | A | B | C | B | C | B | B | A | B | Inv. |
| 3 | A | A | A | A | A | A | A | A | A | B | C | A | Inv. |
| 4 | B | B | A | A | B | B | B | B | B | A | A | A | Inv. |
| 5 | B | B | A | A | A | B | B | B | B | A | B | B | Inv. |
| 6 | A | A | A | A | A | B | A | B | A | B | A | A | Inv. |
| 7 | A | A | A | A | A | A | A | A | A | A | B | A | Inv. |
| 8 | A | A | A | A | A | A | A | A | A | A | A | A | Inv. |
| 9 | D | D | D | D | D | D | D | D | D | D | D | D | Comp. |
| 10 | D | D | D | D | D | D | D | D | D | E | E | D | Comp. |
| 11 | D | D | D | D | D | D | D | D | D | D | D | D | Comp. |
| 12 | D | D | D | D | D | D | D | D | D | D | D | D | Comp. |
| 13 | D | D | D | D | D | D | D | D | D | D | D | D | Comp. |
| 14 | D | D | D | D | D | D | D | D | D | D | D | D | Comp. |

| | | | | | | | | | | | | | |
|---|---|---|---|---|---|---|---|---|---|---|---|---|---|
| *1: Feathering resistance *2: Continuous ejection stability, *3: Intermittent ejection stability *4: Storage stability Inv.: This invention, Comp.: Comparative example | | | | | | | | | | | | | |

As is apparent from the results shown in Table 2, compared to the comparative examples, Ink Sets constituted of the inks of the present invention, which incorporated Polymer A and Polymer B, both previously defined in this invention, provide an excellent image in regard to color bleeding resistance and beading resistance on a low absorptive recording medium such as art paper, and further, in feathering resistance on plain paper, as well as being superior in abrasion resistance, water resistance and glossiness, and further, each Ink Set exhibits excellent ejection stability as well as storage stability.

## Claims

1. An ink-jet ink comprising water, a pigment, Polymer A and Polymer B,
wherein Polymer A is a polymer compound having a plurality of side chains on a hydrophilic main chain and capable of undergoing cross-linking among the side chains when exposed to active rays; and
Polymer B is a copolymer which is obtained from a carboxylic acid containing monomer neutralized by an amine compound and a nonionic monomer having a hydrophobic moiety exhibiting adsorption capability of the pigment, and Polymer B exhibiting a weight-average molecular weight of 5,000 to 100,000, and an acid value of 50 to 500 mgKOH/g.

2. The ink-jet ink of Claim 1 above, wherein the side chains of Polymer A are nonionic or anionic.

3. The ink-jet ink of Claim 1 or 2, wherein Polymer A, having side chains, are represented by Formula (A):
Formula (A) P- [(x)m-(B)p-(Y)n]
Wherein P is a hydrophilic main chain, [(X)m-(B)p-(Y)n] represents a side chain, X is a linking group having two or more valences, B is a cross-linking group, Y is a hydrogen atom or a substituent group, m and n are each an integer of 0 or 1, and p is an integer of 1 or 2.

4. The ink-jet ink of any one of Claims 1 - 3, wherein the hydrophilic main chain of Polymer A is a saponified compound of polyvinyl acetate, a saponification ratio of which is 77 to 99% and a polymerization degree is 200 to 4,000.

5. The ink-jet ink of any one of Claims 1 - 4, wherein a modification ratio of the side chains compared to the hydrophilic main chain of Polymer A is 0.8 to 4 mol%.

6. The ink-jet ink of any one of Claims 1 - 5, wherein a content of Polymer B compared to the pigment is not less than 5 weight% and less than 200 weight%.

7. The ink-jet ink of any one of Claims 1 - 6, wherein a water-soluble photopolymerization initiator is incorporated.

8. An ink-jet ink set comprising more than two kinds of ink-jet inks, wherein at least one of the ink-jet inks is an ink-jet ink of any one of Claims 1 - 7.

9. A method of ink-jet recording comprising the steps of:
a) ejecting an ink-jet ink of any one of Claims 1 - 7 onto a recording medium to form an image;
b) irradiating the ejected image with active energy rays; and
c) drying the irradiated image.

10. The method of ink-jet recording comprising the steps of:
a) ejecting an ink-jet ink comprising an ink-jet ink set of Claim 8 onto a recording medium to form an image;
b) irradiating the ejected image with active energy rays; and
c) drying the irradiated image.

11. The method of ink-jet recording of Claim 9 or 10, wherein the recording medium is a low absorptive recording medium of the ink.

12. The method of ink-jet recording of Claim 9 or 10, wherein the recording medium is a non-absorptive recording medium of the ink.

13. The method of ink-jet recording of Claim 9 or 10, wherein the recording medium is plain paper.

## Patentansprüche

1. Eine Tintenstrahltinte, umfassend Wasser, ein Pigment, Polymer A und Polymer B,
wobei Polymer A eine Polymerverbindung mit einer Mehrzahl von Seitenketten an einer hydrophilen Hauptkette ist und in der Lage ist, an den Seitenketten eine Vernetzung einzugehen, wenn es aktiven Strahlen ausgesetzt ist; und
Polymer B ein ausgehend von einer Carbonsäure erhaltenes Copolymer ist, das ein durch eine Aminverbindung neutralisiertes Monomer und ein nichtionisches Monomer enthält, das eine hydrophobe Gruppe aufweist, die eine Adsorptionsfähigkeit des Pigments aufweist, und Polymer B ein gewichtsmittleres Molekulargewicht von 5.000 bis 100.000 und eine Säurezahl von 50 bis 500 mg KOH/g aufweist.

2. Die Tintenstrahltinte nach dem obigen Anspruch 1, wobei die Seitenketten von Polymer A nichtionisch oder anionisch sind.

3. Die Tintenstrahltinte nach Anspruch 1 oder 2, wobei das Polymer A, welches Seitenketten aufweist, durch die Formel (A) dargestellt wird:
Formel (A) P-[(X)m-(B)p-(Y)n]
wobei P eine hydrophile Hauptkette ist, [(X)m-(B)p-(Y)n] eine Seitenkette darstellt, X eine Verbindungsgruppe mit zwei oder mehr Valenzen ist, B eine Vernetzungsgruppe ist, Y ein Wasserstoffatom oder eine Substituentengruppe ist, m und n jeweils eine ganze Zahl 0 oder 1 sind, und p eine ganze Zahl 1 oder 2 ist.

4. Die Tintenstrahltinte nach einem der Ansprüche 1 bis 3, wobei die hydrophile Hauptkette des Polymers A eine verseifte Verbindung von Polyvinylacetat ist, deren Verseifungsverhältnis 77% bis 99% beträgt und deren Polymerisationsgrad 200 bis 4.000 beträgt.

5. Die Tintenstrahltinte nach einem der Ansprüche 1 bis 4, wobei ein Modifikationsverhältnis der Seitenketten verglichen mit der hydrophilen Hauptkette des Polymers A 0,8 bis 4 mol % beträgt.

6. Die Tintenstrahltirite nach einem der Ansprüche 1 bis 5, wobei ein Gehalt an Polymer B verglichen mit dem Pigmentfarbstoff nicht weniger als 5 Gew.-% und weniger als 200 Gew.-% beträgt.

7. Die Tintenstrahltinte nach einem der Ansprüche 1 bis 6, worin ein wasserlöslicher Photopolymerisationsinitiator enthalten ist.

8. Eine Zusammenstellung von Tintenstrahltinten, umfassend mehr als zwei Arten von Tintenstrahltinten, wobei mindestens eine der Tintenstrahltinten eine Tintenstrahltinte nach einem der Ansprüche 1 bis 7 ist.

9. Ein Verfahren zum Tintenstrahldrucken, folgende Schritte umfassend:
α) Ausstoßen einer Tintenstrahltinte nach einem der Ansprüche 1 bis 7 auf ein Aufzeichnungsmedium zum Bilden eines Bildes;
b) Bestrahlen des ausgestoßenen Bildes mit aktiven Energiestrahlen; und
c) Trocknen des bestrahlten Bildes.

10. Das Verfahren zum Tintenstrahldrucken, folgende Schritte umfassend:
α) Ausstoßen einer Tintenstrahltinte, die eine Zusammenstellung von Tintenstrahltinten nach Anspruch 8 umfasst, auf ein Aufzeichnungsmedium zum Bilden eines Bildes;
b) Bestrahlen des ausgestoßenen Bildes mit aktiven Energiestrahlen; und
c) Trocknen des bestrahlten Bildes.

11. Das Verfahren zum Tintenstrahldrucken nach Anspruch 9 oder 10, wobei das Aufzeichnungsmedium ein die Tinte gering absorbierendes Aufzeichnungsmedium ist.

12. Das Verfahren zum Tintenstrahldrucken nach Anspruch 9 oder 10, wobei dαs Aufzeichnungsmedium ein die Tinte nicht absorbierendes Aufzeichnungsmedium ist.

13. Das Verfahren zum Tintenstrahldrucken nach Anspruch 9 oder 10, wobei das Aufzeichnungsmedium Standardpapier ist.

## Revendications

1. Encre pour jet d'encre comprenant de l'eau, un pigment, un polymère A et un polymère B,
où le polymère A est un composé polymère ayant une pluralité de chaînes latérales sur une chaîne principale hydrophile et est capable de subir une réticulation parmi les chaînes latérales lorsqu'il est exposé à des rayons actifs ; et
où le polymère B est un copolymère qui est obtenu à partir d'un monomère contenant un acide carboxylique neutralisé par un composé amine et un monomère non ionique ayant une fraction hydrophobe représentant une capacité d'adsorption du pigment, et le polymère B présentant un poids moléculaire moyen en poids de 5000 à 100 000, et une valeur d'acide de 50 à 500 mg KOH/g.

2. Encre pour jet d'encre selon la revendication 1 précédente, où les chaînes latérales du polymère A sont non ioniques ou anioniques.

3. Encre pour jet d'encre selon la revendication 1 ou 2, où le polymère A, ayant des chaînes latérales, est représenté par la formule (A) :
Formule (A) P - [(X)m - (B)p - (Y)n]
où P est une chaîne principale hydrophile, [(X)m - (B)p - (Y)n] représente une chaîne latérale, X et un groupe de liaison de valence 2 ou plus, B est un groupe de réticulation, Y est un atome d'hydrogène ou un groupe substituant, m et n sont chacun un entier égal à 0 ou 1, et p est un entier égal à 1 ou 2.

4. Encre pour jet d'encre selon l'une quelconque des revendications 1 à 3, où la chaîne principale hydrophile du polymère A est un composé saponifié d'acétate de polyvinyle, dont le rapport de saponification est de 77 % à 99 % et le degré de polymérisation de 200 à 4000.

5. Encre pour jet d'encre selon l'une quelconque des revendications 1 à 4, où un rapport de modification des chaînes latérales comparé à la chaîne principale hydrophile du polymère A est égal à 0,8 % à 4 % en molle.

6. Encre pour jet d'encre selon l'une quelconque des revendications 1 à 5, où une teneur en polymère B comparée au pigment n'est pas inférieure à 5 % en poids et est inférieure à 200 % en poids.

7. Encre pour jet d'encre selon l'une quelconque revendication 1 à 6, où un initiateur de photopolymérisation hydrosoluble est incorporé.

8. Ensemble d'encre pour jet d'encre comprenant plus de deux types d'encres pour jet d'encre, dont au moins l'une desdites encres pour jet d'encre est une encre pour jet d'encre selon l'une quelconque des revendications 1 à 7.

9. Procédé d'impression à jet d'encre comprenant les étapes consistant à :
a) éjecter une encre pour jet d'encre selon l'une quelconque des revendications 1 à 7 sur un support d'impression pour former une image ;
b) irradier l'image éjecter avec des rayons d'énergie actifs ; et
c) sécher l'image irradiée.

10. Procédé d'impression à jet d'encre comprenant les étapes consistant à :
a) éjecter une encre pour jet d'encre comprenant un ensemble d'encre pour jet d'encre selon la revendication 8 sur un support d'impression pour former une image ;
b) irradier l'image éjectée avec des rayons d'énergie actifs ; et
c) sécher l'image irradiée.

11. Procédé d'impression à jet d'encre selon la revendication 9 ou 10, où le support d'impression est un support d'impression à faible absorption de l'encre.

12. Procédé d'impression à jet d'encre selon la revendication 9 ou 10, où le support d'impression est un moyen d'impression non absorbant de l'encre.

13. Procédé d'impression par jet d'encre selon la revendication 9 ou 10, où le support d'impression est du papier ordinaire.
